# EUROPÄISCHE PATENTANMELDUNG

(11) **EP 1 049 106 A1**
(43) Veröffentlichungstag der Anmeldung: **02.11.2000**
(21) Anmeldenummer: 00108379.9
(22) Anmeldetag: 17.04.2000
(51) Int. Cl.: G21C 3/322

(54) **Leichtwasser-Reaktor-Brennelement mit einem Abstandhalter und einer an der oberen Kante eines Randstegs des Abstandhalters sitzenden, nach innen gebogenen Fahne**

(30) Priorität: 29.04.1999 DE 29907610 U
(71) Anmelder: SIEMENS AKTIENGESELLSCHAFT, 80333 München (DE)
(72) Erfinder: Meier, Werner, Dipl.-Ing. (FH), 91358 Kunreuth (DE)

(57) **Zusammenfassung**

Bei einem Brennelement (1) eines Leichtwasser-Reaktors, insbesondere eines Siedewasser-Reaktors, ist ein Bereich (26) einer an der oberen Kante (17) eines Randstegs (15A) eines Abstandhalters (9) sitzenden Fahne (23) nach innen gebogen. Zur Leitung der Kühlmittelströmung (3) gezielt auf die Oberfläche eines Brennstabs (7B) ist zudem ein Teilbereich (27B) mit einer Unterseite (30B) der Fahne (23) schräg zu einem ersten Brennstab (7B) hin gewendet.

## Beschreibung

Die Erfindung bezieht sich auf ein von Kühlmittel eines Leichtwasser-Reaktors von unten anströmbares Brennelement mit parallel zu einer Längsachse des Brennelements angeordneten Brennstäben und einem quer zur Längsachse angeordnetem Abstandhalter, der ein Maschengitter zur Halterung der Brennstäbe und einen am Rand des Maschengitters angebrachten Randsteg enthält, wobei eine Fahne an einer der Kühlmittelströmung abgewandten, oberen Kante des Randstegs einen Zwischenraum zwischen einem ersten Brennstab und einem zweiten Brennstab gegenüber sitzt. Dabei ist ein Bereich der Fahne zu dem Zwischenraum hin, nach innen gebogen.

Ein Brennelement eines Leichtwasser-Reaktors umfaßt unter anderem ein Bündel aus Brennstäben, die axial und parallel zueinander - also parallel zu einer Längsachse des Brennelements - angeordnet sind. Die Brennstäbe sind dabei in einem quer zur Längsachse angeordnetem Abstandhalter in einem Maschengitter gehalten. Das Maschengitter ist dabei unter anderem durch einzelne, aneinander gefügte, polyedrische oder runde Maschen zur Aufnahme jeweils eines Brennstabs zusammengesetzt. An den Seiten ist das Maschengitter entsprechend des Querschnitts des Brennelements durch aneinander gefügte Randstege berandet. Die Randstege können beispielsweise zu einer rechteckförmigen Berandung für ein Brennelement eines Siedewasser- oder Druckwasser-Reaktors oder zu einer sechseckförmigen Berandung beispielsweise für das Brennelement eines WWER-Reaktors nach russischer Bauart oder auch zu einer runden Berandung zusammengefügt sein.

Zum Einsatz in einem Kernreaktor ist ein solches Brennelement von unten durch Kühlmittel anströmbar. Bei der Kühlmittelströmung eines Siedewasser-Reaktors handelt es sich wenigstens im oberen Teil des Brennelements im wesentlichen um eine Zweiphasenströmung aus Wasser und Dampf. Zur effektiven Nutzung des Kühlmittels ist es deshalb bei Siedewasser-Reaktoren von Vorteil, wenn der flüssige Anteil des Kühlmittels bzw. bei Druckwasserreaktoren kälteres Wasser aus den Zwischenräumen zwischen den Brennstäben oder der Peripherie des Brennelements an die beheizten Oberflächen des Brennelements, also der Brennstäbe, umgeleitet wird. Deshalb ist es zweckmäßig, an einer der Kühlmittelströmung abgewandten oberen Seite des Abstandhalters Umleitelemente,wie Fahnen oder Wendeln, für das Kühlmittel anzubringen. Die Umleitelemente sitzen beispielsweise an den durch Stege gebildeten Maschenwänden zwischen Maschen oder auch Zwischenmaschen eines Maschengitters im Inneren eines Abstandhalters.

Auch Randstege am Rand eines Maschengitters eines Abstandhalters können, mindestens an ihrer oberen Kante, nach dem Stand der Technik beispielsweise Fahnen tragen. Nach dem Dokument WO 92/05566 oder dem Deutschen Gebrauchsmuster 296 15 501.2 sitzt eine solche Fahne gegenüber einem Zwischenraum zwischen einem ersten Brennstab und einem zweiten Brennstab. Sie sitzt also dort am Randsteg, wo die die Maschen des Maschengitters bildenden Stege jeweils auf den Randsteg stoßen. Dabei ist also, mindestens ein Bereich der Fahne, nach innen zu dem Zwischenraum zwischen zwei Brennstäben hin gebogen.

Diese Fahne ist als Abweiserfahne konstruiert. Sie sollen ein Verhaken des Abstandhalters beim Einführen in die Brennelement-Ummantelung oder bei der Durchführung eines Kühlwasserrohres oder beim Einführen des Brennelements in einen Stellplatz im Kernreaktorkern vermeiden.

Nach dem Dokument US 5,307,392 ist es auch nützlich die Fahne an der oberen Kante eines Randstegs in einer welligen Profilform zu biegen, um ihr eine federnde Wirkung vor allem gegen Kräfte quer zur Brennelementachse zu verleihen.

Im genannten Stand der Technik ist eine Fahne am Randsteg also als Abweiserfahne und nicht zur Beeinflußung einer Kühlmittelströmung ausgebildet.

Im Dokument EP 0 146 896 A2 wird lediglich darauf hingewiesen, daß eine Fahne an der Oberkante eines Randstegs auch zum Umleiten des Kühlmittels von einem äußeren Bereich über die Abstandhalter-Gitterstruktur und die Brennstäbe dienen könnte. Bei dem genannten Stand der Technik ist eine solche Fahne am Abstandhalter-Randsteg allerdings nur mit einem im wesentlichen ebenen Bereich nach innen zu einem Zwischenraum zwischen zwei Brennstäbe hin gebogen. Deshalb leitet sie nach dieser Konstruktion das flüssige Kühlmittel ins Innere des Brennstabbündels und zwar in die Zwischenräume und Gassen zwischen den Brennstäben.

Es ist aus den obengenannten Gründen aber von Bedeutung, bei einem Einsatz eines Brennelements im Reaktor vor allem die Brennstaboberflächen benetzt zu halten. Es ist deshalb Aufgabe der vorliegenden Erfindung, die Benetzung von Brennstaboberflächen bei einem Brennelement zu fördern.

Zur Lösung der Aufgabe bei einem Brennelement eines Leichtwasser-Reaktors der eingangs genannten Art sieht die Erfindung vor, daß zur Leitung der Kühlmittelströmung gezielt auf die Oberfläche eines Brennstabs ein Teilbereich der nach innen gebogenen Unterseite einer Fahne schräg zum ersten Brennstab hin gewendet ist.

Es ist also erfindungsgemäß vorgesehen, mindestens die Fahne am Randsteg nicht nur nach innen sondern mindestens in einem Teilbereich auch mit einer Komponente in eine andere Richtung - schräg zur Seite - zu biegen. Es wird erfindungsgemäß eine vom Kühlmittel auströmbare Unterseite dieses Teilbereichs dem Kühlmittel seitlich schräg entgegengestellt und zu einem anzuströmenden Brennstab hin gewendet. Auf diese Weise wird die von unten her gerichtete Kühlmittelströmung von der Schräge des Teilbereichs an der Unterseite der Randfahne abgelenkt und gezielt auf den anzuströmenden Brennstab umgeleitet.

Die Erfindung geht dabei von der Erkenntnis aus, daß durch eine solche Fahne an einer der Kühlmittelströmung abgewandten, oberen Kante eines Randstegs auch Kühlmittel von einem peripheren Bereich eines Brennelements in einem Reaktorkern gezielt auf die Oberflächen von Brennstäben umgeleitet wird, so daß die Kühlmittelschicht auf den beheizten Brennstäben insbesondere am Rand eines Brennelements verstärkt wird. Auf diese Weise sind die Wärmeübertragungseigenschaften von einem Brennstab, vor allem auch von einem peripheren Brennstab, auf das Kühlmittel deutlich verbessert gegenüber Wärmeübertragungseigenschaften bei weniger benetzten Brennstäben. Dadurch wird der Mindestabstand zur Siedeübergangsleistung eines Reaktors verbessert, d.h. ein Brennelement mit Fahnen entsprechend der Erfindung am Randsteg eines Abstandhalters kann im Reaktor so eingesetzt werden, daß es eine höhere Leistung abgibt als eines ohne die erfindungsgemäßen Fahnen.

Es ist vorteilhaft, wenn die Fahne gegenüber einem Zwischenraum zwischen einem ersten Brennstab und einem zweiten Brennstab sitzt.

Vorteilhaft ist bei einem Brennelement gemäß der Erfindung die nach innen gebogene an der oberen Kante eines Randstegs sitzende Fahne in sich gekrümmt. Dies hat den Vorteil, daß beispielsweise die Kühlmittelströmung besonders effektiv und ohne großen Druckverlust auf die Oberfläche eines Brennstabs geleitet werden kann, oder es kann ein Drall erzeugt werden. Die Fahne kann also als Ganzes nach innen zu einem Zwischenraum zwischen zwei Brennstäben hin gebogen sein und dann in einem Teilbereich auf einen Brennstab hin gerichtet sein. Sie kann aber auch nur über einen Bereich nach innen zu einem Zwischenraum zwischen zwei Brennstäben hin gebogen sein und dieser Bereich kann dann ganz oder in einem Teilbereich so gekrümmt sein, daß das Kühlmittel auf einen Brennstab hin umgeleitet wird.

Nach einer Weiterbildung der Erfindung ist es auch günstig, daß die Unterseite der Fahne wenigstens einen zweiten Teilbereich aufweist, über den die Unterseite schräg zum zweiten Brennstab hin gewendet ist. Dies hat den Vorteil, daß eine zwischen zwei Brennstäben gebogene Fahne das Kühlmittel gezielt in zwei unterschiedliche Richtungen auf zwei benachbarte Brennstäbe umleiten kann. Vorteilhaft sind bei dieser erfindungsgemäßen Wahl die beiden Bereiche durch eine Sicke in der Fahne gebildet. Diese Sicke sitzt günstigerweise etwa mittig in einer solchen Fahne und verläuft im wesentlichen über ihre gesamte Länge. Die Kühlmittelströmung von unten wird durch eine solche Randstegfahne mit Sicke praktisch in zwei Richtungen aufgespalten und insbesondere auf zwei benachbarte Brennstäbe umgeleitet. Eine derartige Sicke dient auch zur Versteifung der Fahne.

Zur Leitung der Kühlmittelströmung auf die Oberfläche eines Brennstabs erweist es sich als besonders vorteilhaft, daß die Fahne mindestens entlang einer Biegelinie abgebogen ist, die parallel zu einer zu den Brennstäben senkrechten Ebene verläuft, und der abgebogene Bereich der Fahne in sich gekrümmt ist.

Nach einer Weiterbildung der Erfindung ist also eine Fahne am Randsteg so gebogen, daß sich zwei Krümmungen oder Schrägen an der Fahne überlagern. Dabei bewirkt die erste Krümmung oder Schräge eine Umleitung des flüssigen Kühlmittels in das Bündelinnere und die zweite Krümmung oder Schräge eine Umleitung des flüssigen Kühlmittels in Richtung einer Oberfläche eines Brennstabs.

Nach einer Weiterbildung der Erfindung ist es dabei ebenso vorteilhaft, daß die Fahne mindestens entlang einer Biegelinie abgebogen ist, die schräg zu einer zu den Brennstäben senkrechten Ebene verläuft. Diese Weiterbildung hat den Vorteil, daß die Fahne aufgrund der schrägen Biegelinie gleichzeitig nach innen und in Richtung eines Brennstabs abgebogen ist, d.h. die von Kühlmittel ausströmbare Unterseite der Fahne ist zum Brennstab hin gewendet. Es kann zudem günstig sein, den nach innen gebogenen Bereich zusätzlich zu krümmen, er könnte aber auch im wesentlichen eben sein.

Die am oberen Rand eines Randstegs sitzende Fahne kann an der oberen Kante des Randstegs angesetzt oder an der Außenseite des Randstegs angebracht sein. Sie wirkt dabei nach der Erfindung als Umleit-Fahne für das Kühlmittel und hat außerdem noch die Wirkung einer Ableitfahne nach dem Stand der Technik.

Anhand einer Zeichnung werden vorteilhafte Ausführungsformen der Erfindung näher erläutert. Die Figuren zeigen:
- FIG 1: einen Ausschnitt eines von unten anströmbaren Brennelements mit Abstandhalter und Randstegfahnen zur gezielten Umleitung der Kühlmittelströmung auf die Brennstäbe,
- FIG 2: eine Detailansicht einer Fahne zur Umleitung der Kühlmittelströmung,
- FIG 3: einen Randsteg mit einer Fahne an seiner oberen Kante zur Umleitung der Kühlmittelströmung jeweils auf die Oberflächen zweier benachbarter Brennstäbe,
- FIG 4: einen Randsteg mit einer Fahne nach Figur 3 in der Seitenansicht,
- FIG 5: Profil einer Fahne, die eine Sicke aufweist, im Schnitt V - V von Figur 4,
- FIG 6: ein weiteres Profil einer Fahne, die eine Sicke aufweist, im Schnitt VI - VI von Figur 4,
- FIG 7: einen weiteren Randsteg mit der Ausführung einer Fahne nach Figur 6 an seiner oberen Kante,
- FIG 8: eine Ausführungsform einer Fahne am Randsteg mit schrägen Biegelinien,
- FIG 9: eine weitere Ausführungsform einer Fahne mit schräger Biegelinie.

Gleiche Elemente tragen in den Figuren jeweils gleiche Bezugszeichen.

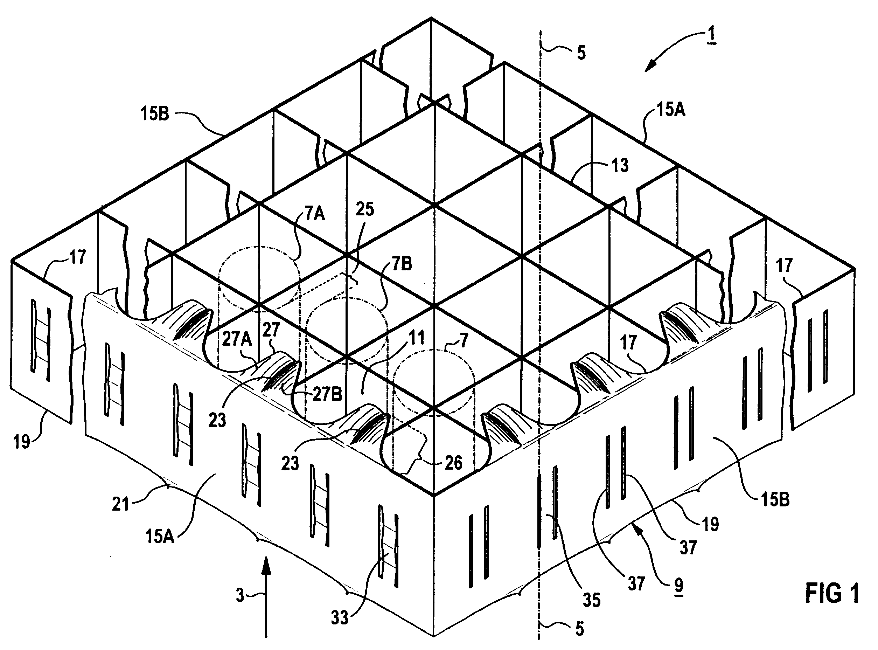

Bei einem von unten anströmbaren Brennelement 1 eines Leichtwasser-Reaktors nach Figur 1 verläuft die Richtung 3 der Strömung des Kühlmittels im wesentlichen parallel zu einer Längsachse 5 des Brennelements 1. Ebenso sind die Brennstäbe 7, 7A, 7B axial parallel zu dieser Achse 5 in einem quer zur Längsachse 5 angeordneten Abstandhalter 9 gehalten. Jeder Brennstab 7 sitzt dabei in einer Masche 11 eines Maschengitters 13 des Abstandhalters 9 mit einem Zwischenraum 25 zwischen einem ersten Brennstab 7B und einem zweiten Brennstab 7A. Bei der hier gezeigten Ausführungsform ist der Rand des Abstandhalters 9 rechteckförmig durch paarweise parallele Randstege 15A bzw. 15B gebildet. Sowohl an der oberen Kante 17, als auch an der unteren Kante 19 eines Randstegs 15A sitzen Fahnen 21 und 23 - ebenso bei einem Randsteg 15B, bei dem die Fahnen nicht gezeigt sind.

Eine Fahne 21, 23 sitzt dabei jeweils einem Zwischenraum 25 zwischen einem ersten Brennstab 7B und einem zweiten Brennstab 7A gegenüber und setzt dabei an einer Kante 17, 19 eines jeweiligen Randstegs 15A, 15B an. Die Fahne 21 und 23 ist bei dieser Ausführungsform an der oberen Kante 17 angeformt, könnte aber ebenso dort angesetzt bzw. angefügt sein.

Die Fahne 21 an der unteren Kante 19 des Randstegs 15B ist dabei als Abweiserfahnen ausgebildet, wie sie im Stand der Technik erläutert ist. Zu diesem Zweck ist die Fahne 21 mit einem im wesentlichen ebenen Bereich zu einem Zwischenraum 25 zwischen zwei Brennstäbe 7A, 7B hin gebogen.

Wie Figur 2 zu entnehmen, ist die Fahne 23 an der oberen Kante 17 eines Randstegs 15A und 15B entsprechend der vorliegenden Erfindung als Fahne zur Leitung der Kühlmittelströmung 3 in seitliche Richtungen 4 - und damit auf die Oberfläche eines Brennstabs 7,7A,7B (Figur 1)- ausgebildet. Dazu ist zunächst ein Bereich 26 der Fahne 23 zu dem Zwischenraum 25 zwischen zwei Brennstäben 7A und 7B hin, nach innen gebogen (Figur 1). Zudem ist nach Figur 2 ein erster Teilbereich 27B der nach innen gebogenen Unterseite 30B und ein zweiter Teilbereich 27A der nach innen gebogenen Unterseite 30A schräg zur Seite gebogen, zur Umleitung der Kühlmittelströmung aus der Richtung 3 in eine Richtung 4 gezielt auf die Oberfläche eines ersten Brennstabs 7B und eines zweiten Brennstabs 7A.

Nach der Ausführungsform in Figur 2 weist eine Fahne 23 also einen nach innen gebogenen Bereich 26 auf, der im wesentlichen entlang einer Krümmungslinie 29 und einer weiteren, überlagerten Krümmungslinie 31 in sich gekrümmt ist. Dabei bewirkt die erste Krümmung 29 eine Umleitung des flüssigen Kühlmittels aus der Richtung 3 durch die Zwischenräume 25 in das Innere des Bündels von Brennstäben 7,7A,7B (Figur 1) und die zweite Krümmung 31 eine Umleitung des flüssigen Kühlmittels zur Seite, in die Richtung 4 (Figur 2) und damit gezielt auf die Oberfläche eines Brennstabs 7A und eines Brennstabs 7B. Dabei ist ein Teilbereich 27B der vom Kühlmittel anströmbare Unterseite 30B zu einem ersten Brennstab 7B hin gewendet und ein Teilbereich 27A einer Unterseite 30A auf einen Brennstab 7A hin gewendet. Bei dieser Ausführungsform sind die beiden Brennstäbe 7A, 7B direkt benachbart.

Im übrigen weist ein Randsteg nach der hier erläuterten Erfindung auch Anlageelemente 33 zur federnden Halterung von äußeren Brennstäben 7A, 7B auf. Außerdem sind auch Streben 35 und Einprägungen 37 zur Versteifung eines Randstegs 15A, 15B vorhanden.

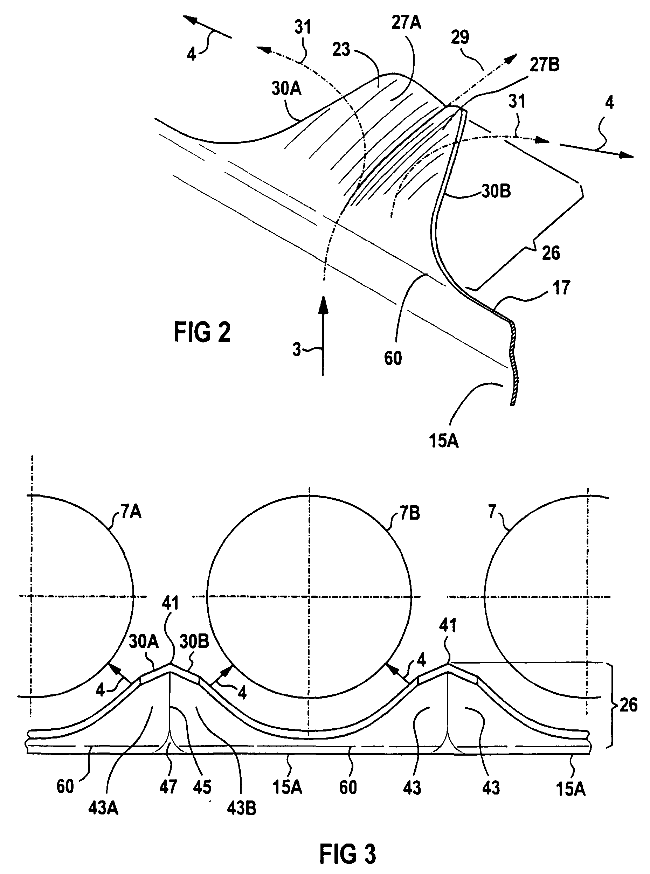

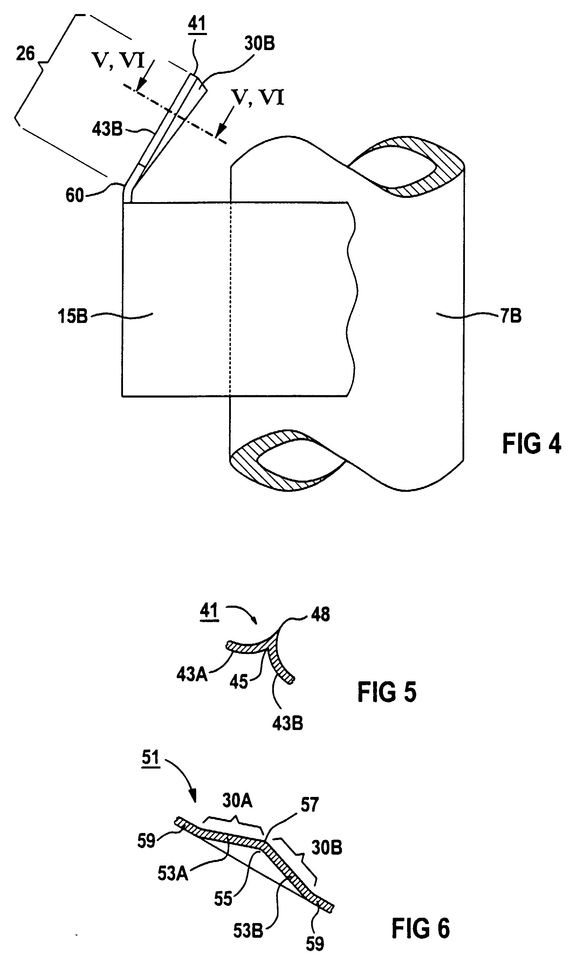

Eine weitere Ausführungsform einer Fahne 41 an einem Randsteg 15A ist in Figur 3 als Aufsicht von oben gezeigt. Der nach innen gebogene Bereich 26 einer Fahne 41 ist in diesem Fall in dem schräg zu einer Seite geneigten Teilbereich 43B in sich gekrümmt, und seine Unterseite 30B ist auf einen Brennstab 7B hin gewendet. Ebenso ist ein Teilbereich 43A der Unterseite 30A auf einen Brennstab 7A hin gewendet. Durch diese Konstruktion ergibt sich auch hier eine Umleitung des Kühlmittels bei dem von unten anströmbaren Brennelement in die Richtung 4 gezielt auf die Oberfläche eines Brennstabs 7A und 7B. Die beiden Bereiche 43A und 43B einer Fahne 41 am Randsteg 15A sind nach dieser Ausführungsform durch eine Sicke 45 gebildet, die in eine Ausnehmung 47 mündet. Der zu einem ersten Brennstab 7B hin gewendete erste Teilbereich 43B einer Unterseite 30B einer Fahne 41 ist in der Seitenansicht in Figur 4 gezeigt. Der Teilbereich 43B mit einer Unterseite 30B ist dabei zum Brennstab 7B hin gewendet. In Figur 5, einem Schnitt entlang der Linie V - V von Figur 4, ist die Ausbildung der beiden Bereiche 43A und 43B durch eine V-förmige Sicke 45 gezeigt.

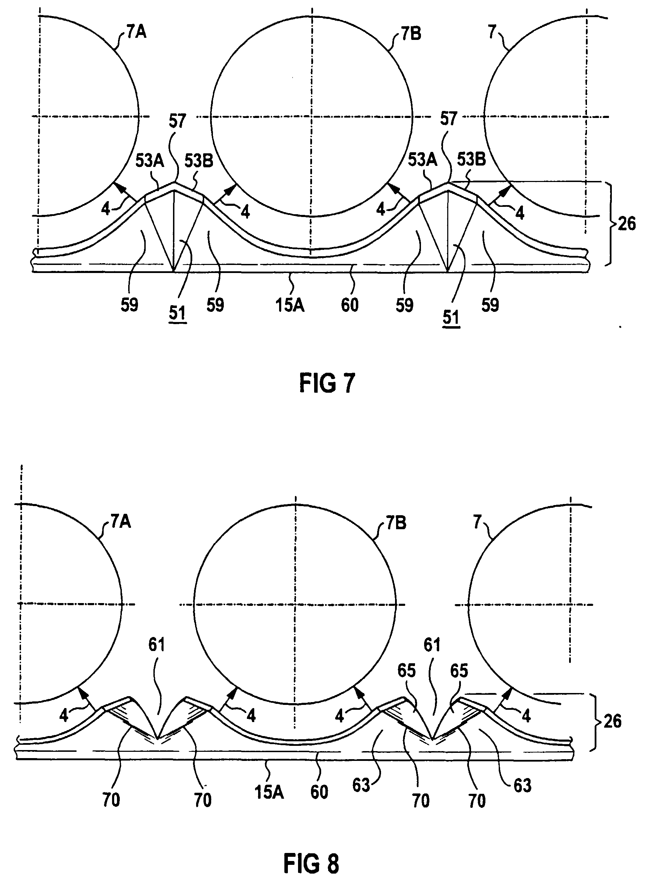

Auch bei der ähnlichen Ausführungsform einer Fahne entlang eines Schnitts VI - VI in Figur 6 sind zwei Bereiche 53A bzw. 53B durch eine Sicke 55 gebildet. Über die Bereiche 53A bzw. 53B sind die Unterseiten 30A bzw. 30B auf einen Brennstab 7A bzw. 7B hin gewendet. Die Bereiche 53A und 53B sind jedoch eben und nicht wie die Bereiche 43A und 43B in sich gekrümmt. Außerdem laufen die beiden Bereiche 53A und 53B unter einem größeren Winkel auf die Spitze 57 der Sicke 55 zu als die Bereiche 43A, 43B auf die Spitze 48 der Sicke 45 (Figur 5). Die Sicke 55 ist von zwei ebenen Bereichen 59 umgeben. Dies ist auch als Aufsicht einer Fahne 51 in der Figur 7 gezeigt.

Bei allen bisher gezeigten Ausführungsbeispielen ist eine Fahne 23, 41 oder 51 entlang einer Biegelinie 60 abgebogen, die parallel zu einer zu den Brennstäben 7 senkrechten Ebene verläuft. Dabei ist der gesamte nach innen gebogene Bereich 26 gekrümmt, d.h. der Bereich 26 ist entweder in sich gekrümmt - wie etwa in den Teilbereichen 27, 27A, 27B oder 43, 43A, 43B - oder der nach innen gebogene Bereich 26 setzt sich aus mehreren Teilbereichen 59, 53A, 53B zusammen, die jeder für sich eben sind, aber winklig zueinander stehen.

In Figur 8 ist eine Ausführungsform einer Fahne 61 gezeigt, die über einen Teilbereich 65 entlang einer Biegelinie 70 abgebogen ist, die schräg zu einer zu den Brennstäben 7 senkrechten Ebene verläuft. Auf diese Weise wird Kühlmittel direkt entlang der Richtung 4 auf die Oberfläche eines Brennstabs 7 umgeleitet. Bei der in Figur 8 gezeigten Ausführungsform ist ein weiterer Teilbereich 63 der Fahne 61 entlang einer waagerechten Biegelinie 60 nach innen gebogen. Dadurch ist der gesamte Bereich 26 der Fahne 61 nach innen gebogen.

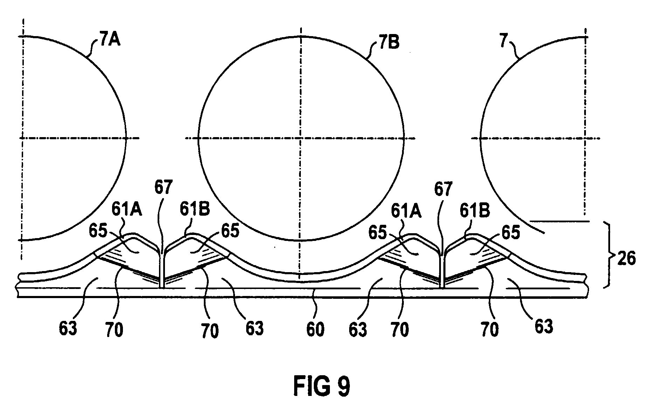

Es kann aber auch günstig sein, den Bereich 63 in einer Ebene mit der Ebene des Randstegs 15A zu belassen, wie es in Figur 9 gezeigt ist. In Figur 9 ist lediglich der Teilbereich 65 der Fahne 61A entlang einer schrägen Biegelinie 70 nach innen und zu einem Brennstab 7A hin abgebogen - also mit seiner Unterseite zum Brennstab 7A hin gewendet. Zudem weist eine Fahne 61A nur einen einzigen Teilbereich 65, über den die Unterseite der Fahne zum Brennstab hin gewendet ist. Im Unterschied zu den einstückigen Fahnen zur Umleitung des Kühlmittels auf zwei benachbarte Brennstäbe 7A, 75 in den bisherigen Ausführungsformen ist die Fahne 61A durch einen Schlitz 67 von der Nachbarfahne 61B getrennt. Die Nachbarfahne 61B ist zur Umleitung des Kühlmittels auf einen anderen benachbarten Brennstab 7B hin vorgesehen. Sie weist dazu einen Teilbereich 65 der Fahne 61B auf, der entlang einer schrägen Biegelinie 70 nach innen und zu einem Brennstab 7B hin gebogen ist. Die Unterseite des Bereichs 65 der Fahne 61B ist damit auf den Brennstab 7B hin gewendet.

## Patentansprüche

1. Brennelement (1) eines Leichtwasserreaktors mit parallel zu einer Längsachse (5) des Brennelements (1) angeordneten Brennstäben (7,7A,7B) und einem quer zur Längsachse (5) angeordnetem Abstandhalter (9), der ein Maschengitter (13) zur Halterung der Brennstäbe (7,7A,7B) und einen am Rand des Maschengiters (13) angebrachten Randsteg (15A,15B) enthält, wobei eine Fahne (23) an einer der Kühlmittelströmung (3) abgewandten, oberen Kante (17) des Randstegs (15A) sitzt, und eine von Kühlmittel anströmbare, in einen Zwischenraum (25) zwischen einem ersten Brennstab (7B) und einem zweiten Brennstab (7A) nach innen gebogene Unterseite (30A,30B) aufweist, **dadurch gekennzeichnet,** daß ein Teilbereich (27B) der nach innen gebogenen Unterseite (30B) schräg zum ersten Brennstab (7B) hin gewendet ist.

2. Brennelement (1) nach Anspruch 1, **dadurch gekennzeichnet,** daß die Fahne (23) in sich gekrümmt ist.

3. Brennelement (1) nach Anpruch 1 oder 2, **dadurch gekennzeichnet,** daß die Unterseite (30A,30B) wenigstens einen zweiten Teilbereich (27A) aufweist, über den die Unterseite (30A) zum zweiten Brennstab (7A) hin gewendet ist.

4. Brennelement (1) nach einem der Anprüche 1 bis 3, **dadurch gekennzeichnet,** daß die beiden Teilbereiche (27A,27B) durch eine Sicke (45,55) in der Fahne (23,41,51) gebildet sind.

5. Brennelement (1) nach einem der Ansprüche 1 bis 4, **dadurch gekennzeichnet,** daß die Fahne (23,41,51) entlang einer Biegelinie (60) abgebogen ist, die parallel zu einer zu den Brennstäben (7,7A,7B) senkrechten Ebene verläuft, und der abgebogene Bereich (26) der Fahne (23,41,51) in sich gekrümmt ist.

6. Brennelement (1) nach einem der Ansprüche 1 bis 5, **dadurch gekennzeichnet,** daß die Fahne mindestens entlang einer Biegelinie (70) abgebogen ist, die schräg zu einer zu den Brennstäben (7,7A,7B) senkrechten Ebene verläuft.
